# EUROPEAN PATENT APPLICATION

(11) **EP 4 621 093 A1**
(43) Date of publication of application: **24.09.2025**
(21) Application number: 25163360.8
(22) Date of filing: 12.03.2025
(51) Int. Cl.: C23C 4/073, C23C 4/11, C23C 4/129, C23C 4/134, C23C 4/02, C23C 4/18, C23C 28/00

(54) **METHODS OF FORMING A BONDCOAT FOR A BARRIER COATING**

(30) Priority: 18.03.2024 PL 44803024
(71) Applicant: General Electric Company, Cincinnati, Ohio 45215 (US); GE Avio S.r.l., 10040 Rivalta di Torino (TO) (IT); GE Aerospace Poland Sp. z o.o., 02-256 Warsaw (PL)
(72) Inventor: JONES, Scott Allen, Schenectady, 12345 (US); NAGARAJ, Bangalore, Schenectady, 12345 (US); NERZ, John E., Schenectady, 12345 (US); VITO, Francesco, 10040 Rivalta di Torino (IT); RUSSO, Marco, 10040 Rivalta di Torino (IT); TORTORA, Vincenzo, 10040 Rivalta di Torino (IT); KUHN, Julie Marie, Schenectady, 12345 (US); OBLOZA, Tomasz, 02-256 Warszawa (PL)
(74) Representative: Openshaw & Co.

(57) **Abstract**

A method of forming a coated component [10] is provided. The method may include forming a bondcoat [12] on a surface [14] of a substrate [16]; thereafter, performing a first heat treatment on the bondcoat [12] on the surface [14] of the substrate [16]; thereafter, forming a barrier coating [20] on the bondcoat [12]; and performing a second heat treatment on the barrier coating [20] on the bondcoat [12] to form the coated component [10]. The bondcoat [12] may comprise MCrAlX where M is Ni, Co, or a combination thereof and where X is Hf, Y, Zr, or combinations thereof.

## Description

### FIELD

The present disclosure generally relates to protective coatings on components, and, more particularly, to coating systems that include a bondcoat between a substrate and a barrier coating.

### BACKGROUND

The use of thermal barrier coatings ("TBCs") on components, such as combustors, high pressure turbine blades, vanes and shrouds is increasing in commercial as well as military gas turbine engines. The thermal insulation provided by a TBC enables such components to survive higher operating temperatures, increases component durability, and improves engine reliability. TBCs are typically formed of a ceramic material and deposited on an environmentally-protective bondcoat to form what is termed a TBC system. Bondcoat materials are typically selected to be capable of forming a continuous and adherent oxide scale on their surface to promote the adhesion of the ceramic coating to the bondcoat.

### BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:
FIG. 1 is a cross-sectional view of an exemplary coated component, such as a combustion liner, having a bondcoat thereon;
FIG. 2 is a cross-sectional view of an exemplary coated component of FIG. 1 including a barrier coating on the bondcoat;
FIG. 3 is a cross-sectional view of the exemplary coated component of FIG. 2 after formation of holes therethrough;
FIG. 4 is a perspective, cross-sectional view of a combustor assembly, which includes a combustor liner having a coating system thereon, in accordance with an exemplary embodiment of the present disclosure; and
FIG. 5 is a block diagram of an exemplary method of forming an exemplary coating system on a substrate to form a coated component, such as a combustion liner of a gas turbine engine.

Throughout the drawings and the detailed description, unless otherwise described, the same drawing reference numerals will be understood to refer to the same or similar elements, features, and structures. The relative size and depiction of these elements may be exaggerated or adjusted for clarity, illustration, and/or convenience.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

In the present disclosure, when a layer is being described as "on" or "over" another layer or substrate, it is to be understood that the layers can either be directly contacting each other or have another layer or feature between the layers, unless expressly stated to the contrary. Thus, these terms are simply describing the relative position of the layers to each other and do not necessarily mean "on top of" since the relative position above or below depends upon the orientation of the device to the viewer.

As used herein, the term "coat" or "coating" refers to a material disposed on at least a portion of an underlying surface in a continuous or discontinuous manner. Further, the term "coat" or "coating" does not necessarily mean a uniform thickness of the disposed material, and the disposed material may have a uniform or a variable thickness. The term "coat" or "coating" may refer to a single layer of the coating material or may refer to a plurality of layers of the coating material. The coating material may be the same or different in the plurality of layers.

Chemical elements are discussed in the present disclosure using their common chemical abbreviation, such as commonly found on a periodic table of elements. For example, hydrogen is represented by its common chemical abbreviation H; helium is represented by its common chemical abbreviation He; and so forth.

This present disclosure relates to methods of forming a coated component, such as coated components suitable for use during exposure to high temperatures, such as the hostile thermal environment of a gas turbine engine. More particularly, the present disclosure is directed to a barrier coating system, such as a TBC, capable of exhibiting resistance to thermal cycling and infiltration by contaminants, for example, of types that may be present in the operating environment of a gas turbine engine. During the formation of a barrier coating system, residual stresses may be formed in the layers of such a barrier coating system during its formation, particularly on relatively thin substrates (e.g., having thicknesses of less than 1800 µm). These stresses may lead to cracking in the layers of the barrier coating system, which may in turn lead to loss of barrier functionality, reduced adhesion of the coating system to the substrate, or both.

Methods are generally disclosed herein that are suitable for forming a barrier coating system (e.g., a TBC system) with reduced residual stresses in the layers of the barrier coating system, particularly within the bondcoat therein. The resulting barrier coating system formed via such methods may have increased tensile bond strength within the bondcoat, thereby mitigating the formation of cracks therein and mitigating the formation of cracks on overlying barrier coating layers.

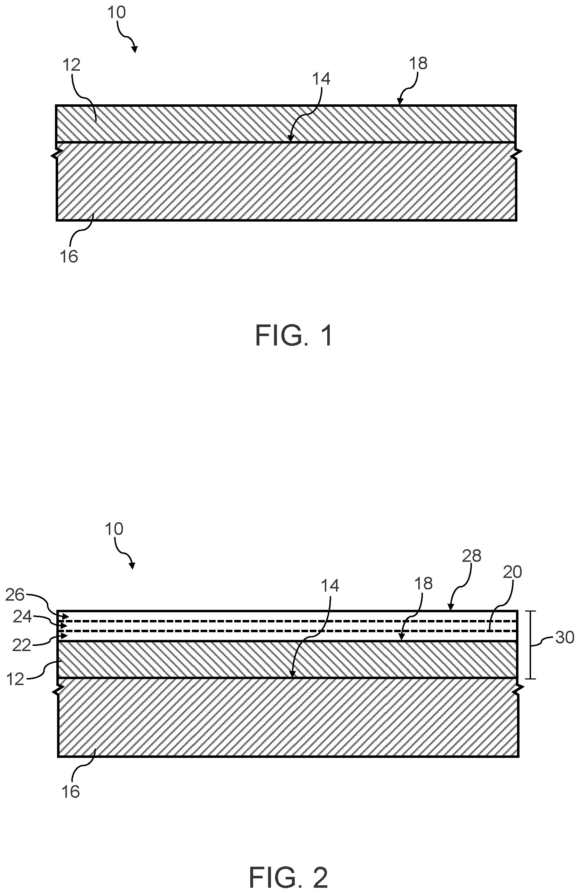

FIG. 1 shows a cross-sectional view of an exemplary coated component 10 having a bondcoat 12 on a surface 14 of a substrate 16. In particular embodiments, the substrate 16 may be a superalloy-based substrate, such as a substrate 16 comprising a nickel-based superalloy, a cobalt-based superalloy, or an iron-based superalloy. The substrate 16 may be relatively thin in its cross-sectional direction (i.e., generally perpendicular to the surface 14), which may be particularly susceptible to bending during thermal expansion cycles in use.

The bondcoat 12 may be an aluminum-containing composition of a type typically used with TBC systems for gas turbine engine components. For example, the bondcoat 12 may generally include MCrAlX where M is Ni, Co or a combination thereof and where X is Hf, Y, Zr, or combinations thereof. In particular embodiments, the bondcoat 12 may include a nickel-containing and aluminum-containing composition, such as MCrAlX where M is Ni with Co optionally present and where X is Hf, Y, Zr, or combinations thereof. In one particular embodiment, X is Y such that the bondcoat 12 comprises MCrAlY where M is Ni with Co optionally present (e.g., NiCrAlY).

Generally, the bondcoat 12 may be formed using a precursor material that includes the MCrAlX composition, such as formed using particles comprising the MCrAlX composition. Various process can be used to deposit such particles, including thermal spray processes such as air plasma spraying (APS), vacuum plasma spraying (VPS), low pressure plasma spraying (LPPS), and high velocity oxy-fuel (HVOF) coating. Such thermal spraying techniques involve propelling melted or at least heat-softened particles of the MCrAlX composition against the surface 14 of the substrate 16, where the particles are quenched and bond to the surface 14 to produce the bondcoat 12. As such, the particles of the MCrAlX composition are deposited in the form of molten "splats."

In one embodiment, the spray conditions may include a standoff distance of 5 cm to 15 cm (e.g., 8 cm to 13 cm) between the spray gun and the surface 14 of the substrate 16. The surface temperature of the surface 14 of the substrate 16 may be relatively cool (e.g., 20 °C to 100 °C) or may be heated as desired. In particular embodiments, the plurality of particles are sprayed at a relatively high deposition rate. For example, the plurality of particles may be sprayed onto the surface 14 of the substrate 16 at a rate that forms a bondcoat layer that is 40 µm or greater in thickness per second per pass of a spray gun (such as 50 µm or greater in thickness per second per pass of a spray gun). At these relatively high deposition rates, the residual stress in the deposited bondcoat 12 may be relatively high, which may lead to subsequent cracking during use particularly on relatively thin substrates that are susceptible to flexing during thermal cycles.

Aluminum-containing bondcoats, such as the MCrAlX compositions described above, may develop an aluminum oxide (alumina) therein during the deposition process through oxidation of the particles. For example, the alumina may form on the boundaries of the deposited particles of the MCrAlX compositions. The bondcoat 12 may be formed to a suitable thickness, such as 125 µm to 525 µm (e.g., 175 µm to 500 µm), such that the bondcoat 12 provides the desired functions of protecting the substrate 16 and anchoring the TBC thereto.

After deposition onto the surface 14 of the substrate 16, the bondcoat 12 may then be heat treated (i.e., a first heat treatment) prior to application of any additional layers thereon with a surface 18 of the bondcoat 12 exposed during the first heat treatment. In particular embodiments, the first heat treatment is performed at a first heat treatment temperature of 925 °C to 1135 °C for a first treatment duration of 1 hour to 20 hours, such as 1050 °C to 1100 °C, for a first treatment duration of 3 to 5 hours. This first heat treatment may be performed in an oxygen deficient first atmosphere, such as in vacuum (e.g., having a first pressure that is less than 95 kPa, such as less than 10 kPa) or an atmosphere comprising an inert gas that is substantially free from oxygen (e.g., argon).

Through this first heat treatment, the residual stress in the bondcoat 12 is relieved and the tensile bond strength of the bondcoat 12 may be increased prior to deposition of any additional layers thereon (e.g., any additional barrier coating layers, such as forming a TBC). That is, the tensile bond strength of the bondcoat 12 may be increased from a deposited tensile bond strength (i.e., a first tensile bond strength) prior to the first heat treatment to a second tensile bond strength after the first heat treatment, with the second tensile bond strength being greater than the first tensile bond strength. In one embodiment, the first tensile bond strength is at least twice the second tensile bond strength. As used herein, the tensile bond strength of the bond coat was measured per ASTM C 633.

After the first heat treatment, a barrier coating (e.g., a TBC) may be formed on the bondcoat 12. Referring to FIG. 2, a barrier coating 20 is shown overlying the bondcoat 12. In the embodiment shown, the barrier coating 20 has multiple layers, including an inner barrier coating layer 22 deposited directly on the bondcoat 12 so as to overlie the bondcoat 12, an interior barrier coating layer 24 deposited directly on the inner barrier coating layer 22 so as to overlie the inner barrier coating layer 22, and an outer barrier coating layer 26 deposited directly on the interior barrier coating layer 24 and that defines an outer surface 28 of the barrier coating 20 as well as the coating system 30 (comprising the bondcoat 12 and the barrier coating 20). As such, when the coated component 10 is subjected to contaminants, the contaminants directly contact the outer surface of the barrier coating 20.

In one embodiment, barrier coating 20 (and any of the barrier coating layers) may be formed of yttria-stabilized zirconia (YSZ) materials. For example, the multilayer barrier coating 20 may include barrier coating layers having different yttria contents. For instance, the yttria content of the outer barrier coating layer 26 may have a higher yttria content than that of the inner barrier coating layer 22 so that the outer barrier coating layer 26 has an increased ability to react with contaminants that contact the outer surface 28 of the barrier coating 20. A contaminant of particular concern is a material containing calcium, magnesium, aluminum, silicon or a combination thereof ("CMAS"), in which case the yttria content of the outer barrier coating layer 26 is able to react with molten CMAS deposits at temperatures above 1200 °C to form a protective reaction product that contains calcium yttrium silicate, which is often known as an apatite phase. The reaction product forms a dense adherent sealing layer on the outer surface 28 of the barrier coating 20 that protects the underlying barrier coating 20 from further infiltration of CMAS.

In one embodiment, the outer barrier coating layer 26 contains 25 to 75 wt. % yttria, with the balance being essentially zirconia (allowing for incidental impurities), such as containing 30 to 59 wt. % yttria, to be particularly sufficient to enable the reaction that forms the desired calcium yttrium silicate reaction product while offering greater erosion and spallation resistance than higher yttria contents. In contrast, the inner barrier coating layer 22 has a lower yttria content and can contain a generally conventional yttria content of 6 to 9 wt % yttria, with the balance being essentially zirconia (allowing for incidental impurities).

The barrier coating 20 may have controlled thickness and porosity throughout its thickness. In one embodiment, the outer barrier coating layer 26 may have a porosity that is different than the inner barrier coating layer 22 in terms of its density (porosity) and thickness. In particular, the inner barrier coating layer 22 may be deposited in a manner that achieves a relatively porous macrostructure, such as a porosity of 10 to 25 volume percent. In contrast, the outer barrier coating layer 26 may be deposited in a manner that achieves a less porous macrostructure than the inner barrier coating layer 22. The outer barrier coating layer 26 may have a porosity of 3 to 15 volume percent. To obtain the desire porosity levels in the layers of the barrier coating 20, the layers of the barrier coating 20 may have a noncolumnar structure as a result of being deposited by a thermal spraying technique, for example, air plasma spraying (APS), vacuum plasma spraying (VPS), low pressure plasma spraying (LPPS), and high velocity oxy-fuel (HVOF) coating. Such thermal spraying involves propelling melted or at least heat-softened particles of a heat fusible material (e.g., metal, ceramic) against a surface, where the particles are quenched and bond to the surface to produce the coating. As such, the individual layers of the barrier coating 20 may be deposited in the form of molten "splats," resulting in a microstructure characterized by horizontal porosity resulting from the presence of the splats (flattened grains). The microstructures of the barrier coating layers may be modified to contain dense vertical cracks. In one embodiment, the bondcoat 12 and the layers of the barrier coating 20 may be deposited using the same thermal spray gun and processes described above.

After deposition of the barrier coating 20, the coated component 10 may be subjected to a second heat treatment to strengthen the deposited barrier coating 20, by reducing residual stresses in the barrier coating 20. Generally, the second heat treatment may be performed according to the same, similar, or different conditions as the first heat treatment. In particular embodiments, the second heat treatment is performed at a second heat treatment temperature of 925 °C to 1135 °C for a second treatment duration of 1 hour to 20 hours, such as 1050 °C to 1100 °C, for a second treatment duration of 3 to 5 hours. This second heat treatment may be performed in an oxygen deficient first atmosphere, such as in vacuum (e.g., having a second pressure that is less than 95 kPa, such as less than 10 kPa) or comprising an inert gas that is substantially free from oxygen (e.g., argon).

Through this second heat treatment, the residual stress in the barrier coating 20 is relieved and the tensile bond strength of the barrier coating 20 may be increased. That is, the tensile bond strength of the barrier coating 20 may be increased from a deposited tensile bond strength (i.e., a first tensile bond strength) prior to the second heat treatment to a second tensile bond strength after the second heat treatment, with the second tensile bond strength being greater than the first tensile bond strength. In one embodiment, the first tensile bond strength of the as-deposited barrier coating 20 is at least twice the second tensile bond strength of the heat treated barrier coating 20.

Additionally, in particular embodiments, the second heat treatment does not materially affect the properties of the underlying bondcoat 12 since the bondcoat 12 has already been heat treated during the first heat treatment. Thus, the tensile bond strength of the bondcoat 12 may be relatively unchanged after the second heat treatment. That is, the tensile bond strength of the bondcoat 12 may after the second heat treatment (i.e., the third tensile bond strength of the bondcoat 12) may be within 15% from its second tensile bond strength (i.e., after the first heat treatment). In one embodiment, the third tensile bond strength is within 10% of the second tensile bond strength, such as within 5% of the second tensile bond strength.

The relative thickness of the barrier coating 20, including the layers therein, may be controlled to achieve improvements in spallation resistance of the barrier coating 20.

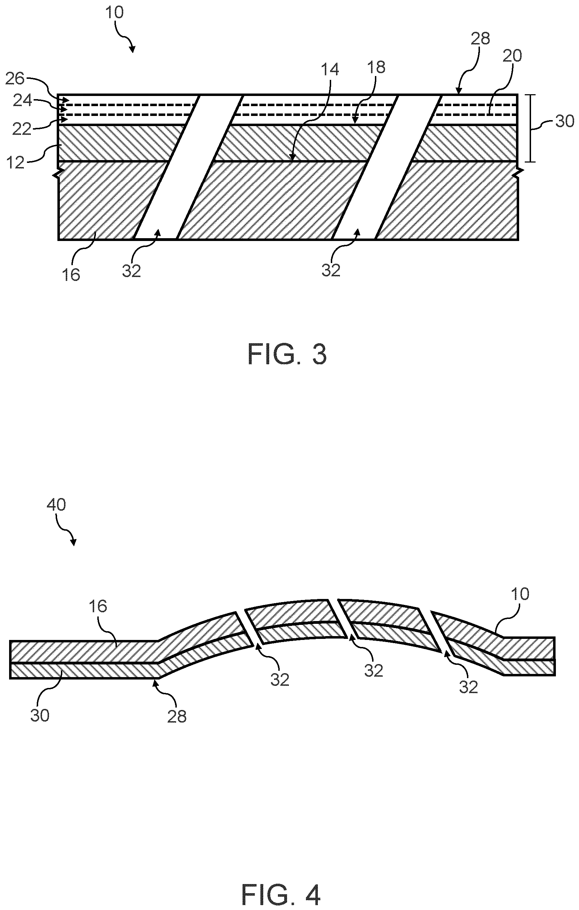

After performing the second heat treatment, a plurality of internal passages 32 maybe formed in the coated component 10, as shown in FIG. 3. As shown, the plurality of internal passages 32 extend through the barrier coating 20, through the bondcoat 12, and through the substrate 16. As such, the plurality of internal passages 32 span the entire thickness of the coated component 10. When the coated component 10 is in the form of a combustion liner, the plurality of internal passages 32 may define cooling holes therein.

The internal passages may be formed by any suitable method, such as via laser drilling. It has been found that the presently described methods that include both the first heat treatment of the bondcoat 12 and the second heat treatment of the barrier coating 20 leads to a coated component 10 that can be drilled with less chipping and cracking in the coating system 30 than with a method that only has a single heat treatment. If desired, the coated component 10 may be brazed onto a second component to form a final article.

As stated above, the coated component 10 of FIG. 3 may be a combustion liner for a gas turbine engine. Referring to FIG. 4, a cross-section of a combustion liner 40 is shown having a coating system 30 on a substrate 16, with the coating system 30 being formed as described above with a bondcoat and a barrier coating (FIGS. 1-3). A plurality of internal passages 32 may be defined in the combustion liner 40, as described above with respect to FIG. 3. The combustion liner 40 is shown as an outer combustion liner with the coating system 30 on the hot gas path side. In alternative embodiments, the combustion liner 40 may be an inner combustion liner. The substrate 16 of the combustion liner 40 may be relatively thin, such as having a thickness of 1800 µm or less, which is particularly susceptible to flexing and bending during thermal cycles experienced in use.

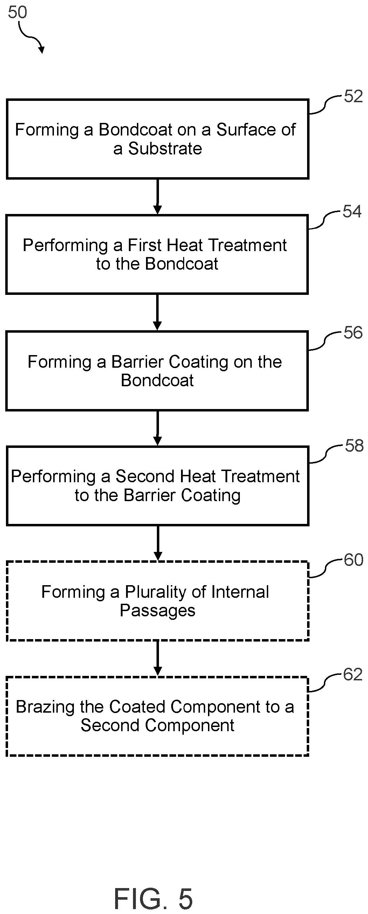

Referring to FIG. 5, a method 50 is generally shown for forming a coated component, such as the coated component shown in FIGS. 1-3 and the combustion liner shown in FIG. 4. At 52, the method includes forming a bondcoat on a surface of a substrate, such as discussed above where the bondcoat comprises MCrAlX where M is Ni, Co or a combination thereof and where X is Hf, Y, Zr, or combinations thereof. Thereafter, at 54, a first heat treatment is performed on the bondcoat on the surface of the substrate, such as described above. Thereafter, at 56, a barrier coating is formed on the bondcoat, such as the TBC described above. At 58, a second heat treatment may then be performed on the barrier coating to form the coated component, such as described above. Optionally, at 60, after performing the second heat treatment, a plurality of internal passages may be formed within the coated component so as to extend through the barrier coating, through the bondcoat, and through the substrate. Also optionally, at 62, after performing the second heat treatment, the coated component is brazed to a second component.

Further aspects are provided by the subject matter of the following clauses:

A method of forming a coated component, the method comprising: forming a bondcoat on a surface of a substrate, wherein the bondcoat comprises MCrAlX where M is Ni, Co, or a combination thereof and where X is Hf, Y, Zr, or combinations thereof; thereafter, performing a first heat treatment on the bondcoat on the surface of the substrate; thereafter, forming a barrier coating on the bondcoat; and performing a second heat treatment on the barrier coating on the bondcoat to form the coated component.

The method of any preceding clause, wherein the substrate has a thickness of 1800 µm or less.

The method of any preceding clause, wherein the substrate comprises a nickel-based superalloy, a cobalt-based superalloy, or an iron-based superalloy.

The method of any preceding clause, wherein the bondcoat comprises MCrAlX where M is Ni with Co optionally present and where X is Hf, Y, Zr, or combinations thereof.

The method of any preceding clause, wherein X is Y such that the bondcoat comprises MCrAlY where M is Ni with Co optionally present.

The method of any preceding clause, wherein M is Ni such that the bondcoat comprises NiCrAlY.

The method of any preceding clause, wherein the bondcoat is forming the bondcoat comprises spraying a plurality of particles comprising the MCrAlX onto the surface of the substrate.

The method of any preceding clause, wherein the plurality of particles are sprayed onto the surface of the substrate at a rate that forms a bondcoat layer that is 40 µm or greater in thickness per second per pass of a spray gun.

The method of any preceding clause, wherein alumina is formed during the air plasma spraying such that the bondcoat comprises alumina and the MCrAlX.

The method of any preceding clause, wherein the bondcoat is formed to a thickness of 125 µm to 525 µm.

The method of any preceding clause, wherein the first heat treatment is performed at a first heat treatment temperature of 925 °C to 1135 °C.

The method of any preceding clause, wherein the first heat treatment is performed for a first treatment duration of 1 hour to 20 hours.

The method of any preceding clause, wherein the first heat treatment is performed in a first atmosphere having a first pressure that is less than 95 kPa.

The method of any preceding clause, wherein the first heat treatment is performed in a first atmosphere having a first pressure that is less than 10 kPa.

The method of any preceding clause, wherein the bondcoat has a first tensile bond strength prior to the first heat treatment and a second tensile bond strength after the first heat treatment, wherein the second tensile bond strength is at least twice the first tensile bond strength.

The method of any preceding clause, wherein the second heat treatment is performed at a second heat treatment temperature of 925 °C to 1135 °C.

The method of any preceding clause, wherein the second heat treatment is performed for a second treatment duration of 1 hour to 20 hours.

The method of any preceding clause, wherein the second heat treatment is performed in a second atmosphere having a second pressure that is less than 95 kPa.

The method of any preceding clause, further comprising: after performing the second heat treatment, forming a plurality of internal passages extending through the barrier coating, through the bondcoat, and through the substrate.

The method of any preceding clause, further comprising: after performing the second heat treatment, brazing the coated component to a second component.

The method of any preceding clause, wherein the coated component is a combustion liner.

A coated component formed according to the method of any preceding clause.

A method of forming a combustion liner, the method comprising: forming a bondcoat on a surface of a substrate that has a thickness of 1800 µm or less, wherein the bondcoat comprises MCrAlX where M is Ni, Co or a combination thereof and where X is Hf, Y, Zr, or combinations thereof, and wherein the substrate comprises a nickel-based superalloy, a cobalt-based superalloy, or an iron-based superalloy; thereafter, performing a first heat treatment to the bondcoat on the surface of the substrate; thereafter, forming a barrier coating on the bondcoat; performing a second heat treatment to the barrier coating on the bondcoat to form the coated component; and thereafter, forming a plurality of internal passages extending through the barrier coating, through the bondcoat, and through the substrate to form the combustion liner.

A method of forming a combustion liner, the method comprising: forming a bondcoat on a surface of a substrate that has a thickness of 1800 µm or less, wherein the bondcoat comprises MCrAlX where M is Ni, Co or a combination thereof and where X is Hf, Y, Zr, or combinations thereof, and wherein the substrate comprises a nickel-based superalloy, a cobalt-based superalloy, or an iron-based superalloy; thereafter, performing a first heat treatment to the bondcoat on the surface of the substrate; thereafter, forming a barrier coating on the bondcoat; performing a second heat treatment to the barrier coating on the bondcoat to form the combustion liner; and thereafter, forming a plurality of internal passages extending through the barrier coating, through the bondcoat, and through the substrate to form the combustion liner.

A combustion liner formed according to the method of any preceding clause.

This written description uses examples to disclose the present disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A method of forming a coated component [10], the method comprising:
forming a bondcoat [12] on a surface [14] of a substrate [16], wherein the bondcoat [12] comprises MCrAlX where M is Ni, Co, or a combination thereof and where X is Hf, Y, Zr, or combinations thereof;
thereafter, performing a first heat treatment on the bondcoat [12] on the surface [14] of the substrate [16];
thereafter, forming a barrier coating [20] on the bondcoat [12]; and
performing a second heat treatment on the barrier coating [20] on the bondcoat [12] to form the coated component [10].

2. The method of claim 1, wherein the substrate [16] has a thickness of 1800 µm or less.

3. The method of any preceding claim, wherein the substrate [16] comprises a nickel-based superalloy, a cobalt-based superalloy, or an iron-based superalloy.

4. The method of any preceding claim, wherein the bondcoat [12] comprises MCrAlX where M is Ni with Co optionally present and where X is Hf, Y, Zr, or combinations thereof.

5. The method of claim 4, wherein X is Y such that the bondcoat [12] comprises MCrAlY where M is Ni with Co optionally present.

6. The method of claim 5, wherein M is Ni such that the bondcoat [12] comprises NiCrAlY.

7. The method of any preceding claim, wherein the bondcoat [12] is forming the bondcoat [12] comprises spraying a plurality of particles comprising the MCrAlX onto the surface [14] of the substrate [16].

8. The method of claim 7, wherein the plurality of particles are sprayed onto the surface [14] of the substrate [16] at a rate that forms a bondcoat layer that is 40 µm or greater in thickness per second per pass of a spray gun.

9. The method of claim 7 or 8, wherein alumina is formed during the air plasma spraying such that the bondcoat [12] comprises alumina and the MCrAlX.

10. The method of any preceding claim, wherein the bondcoat [12] is formed to a thickness of 125 µm to 525 µm, wherein the first heat treatment is performed at a first heat treatment temperature of 925 °C to 1135 °C for a first treatment duration of 1 hour to 20 hours in a first atmosphere having a first pressure that is less than 50 Torr.

11. The method of any preceding claim, wherein the bondcoat [12] has a first tensile strength prior to the first heat treatment and a second tensile strength after the first heat treatment, wherein the second tensile strength is at least twice the first tensile strength.

12. The method of any preceding claim, wherein the second heat treatment is performed at a second heat treatment temperature of 925 °C to 1135 °C for a second treatment duration of 1 hour to 20 hours in a second pressure that is less than 50 Torr.

13. The method of any preceding claim, further comprising:
after performing the second heat treatment, forming a plurality of internal passages [32] extending through the barrier coating [20], through the bondcoat [12], and through the substrate [16].

14. The method of any preceding claim, further comprising:
after performing the second heat treatment, brazing the coated component [10] to a second component.

15. The method of any preceding claim, wherein the coated component [10] is a combustion liner [40].
